# EUROPEAN PATENT APPLICATION

(11) **EP 1 722 536 A1**
(43) Date of publication of application: **15.11.2006**
(21) Application number: 06252058.0
(22) Date of filing: 13.04.2006
(51) Int. Cl.: H04L 29/06

(54) **Load distribution method in which delivery server is selected based on the maximum number of simultaneous sessions set for each content**

(30) Priority: 14.04.2005 JP 2005116660
(71) Applicant: I-Broadcast Inc., Tokyo 102-0083 (JP)
(72) Inventor: Takuyu, Ueda, Tokyo 102-0083 (JP)
(74) Representative: Moir, Michael Christopher

(57) **Abstract**

A session management database stores, in association with each delivery server, a total of the maximum numbers of simultaneous sessions, which is a total value of the maximum numbers of simultaneous sessions accumulated in the delivery server, the maximum number of simultaneous sessions being the number of sessions simultaneously connectable to registered content. A load balancer selects a delivery server for registering content requested to be registered, based on the total of the maximum numbers of simultaneous sessions of each delivery server, which is stored in the session management database as well as adding the maximum number of simultaneous sessions set for the content to the total of the maximum numbers of simultaneous sessions corresponding to the delivery server selected as the content registration destination to update the session management database.

## Description

### BACKGROUND OF THE INVENTION

### 1. Field of the Invention:

The present invention relates to an information delivery system and method for accumulating content, such as image data and voice data, requested by a user to be registered and for delivering the accumulated content in response to a delivery request by another user.

### 2. Description of the Related Art:

Recently, with the spread of the Internet, there have been utilized various information delivery systems for accumulating content, such as image data and voice data, registered by a user and for delivering the accumulated content in response to a delivery request by another user. For example, such an information delivery system is utilized in image bulletin board systems for showing an uploaded image to other users belonging to the same group or for auction systems enabling sales and purchase of items among users.

For example, in an auction system utilizing the Internet, an exhibitor who wants to sell an item uploads an image of the item together with description of the item and the like to a server of an auction operator. The server of the auction operator delivers the stored image data and the like to a user who wants to know information about the item. Thus, it is possible for a user who wants to know information about an exhibited item to view information such as the image of the item.

As such an information delivery system becomes large-scaled, more delivery servers are required for storing content registered by a user and delivering content in response to a delivery request. Therefore, a large-sized information delivery system requires a load balancer (load distribution apparatus) for equalizing loads among such delivery servers as far as possible.

As a prior-art load distribution processing method performed by such a load balancer, there is proposed a load balancer which selects a delivery server with the currently smallest number of accesses as a server with the least load in Japanese Patent Laid-Open No. 10-240697 or Japanese Patent Laid-Open No. 2002-351760, for example.

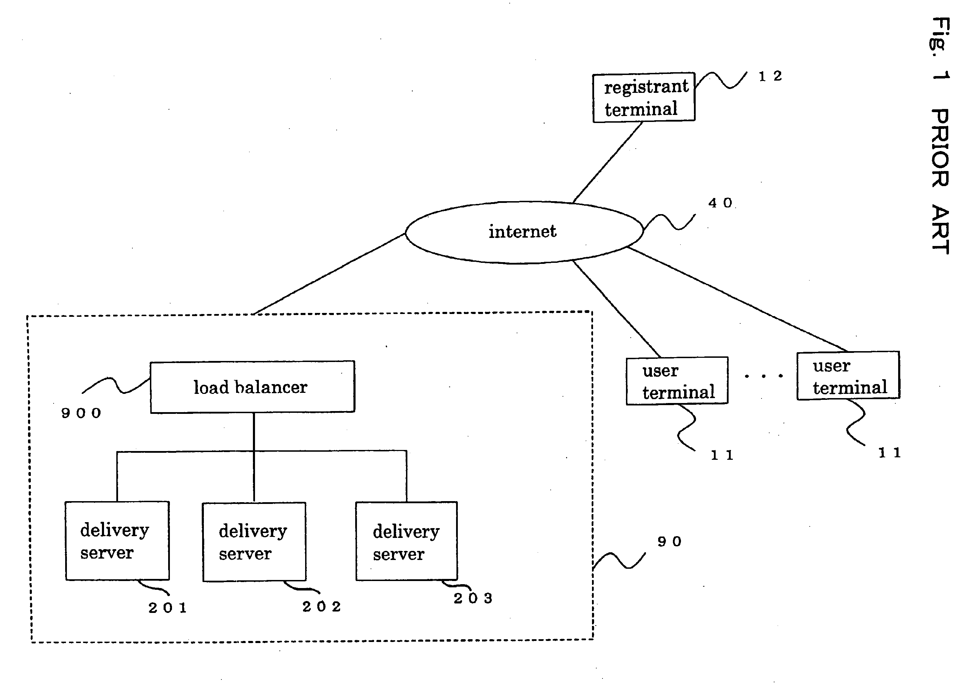

Fig. 1 shows an example of such a prior-art information delivery system. The prior-art system is configured by an information delivery system 90, a registrant terminal 12 and user terminals 11 connected to the system via the Internet 40, as shown in Fig. 1. The prior-art information delivery system 90 is configured by a load balancer (load distribution apparatus) 900 and multiple delivery servers 201 to 203.

Here, description is made on the assumption that the registrant terminal 12 which registers content with the information delivery system 90 is different from the user terminals 11 which request delivery of content registered with the information delivery system 90, for simplification of description. However, the registrant terminal 12 and a user terminal 11 may be the same terminal.

The delivery servers 201 to 203 store content requested by a user to be registered and deliver the content in response to a delivery request by another user.

The load balancer 900 in the prior-art information delivery system 90 registers content based on data sizes so that the data sizes are equal among the delivery servers 201 to 203, with the use of a parallel or serial distribution method.

In such a prior-art load balancing method, it is possible to perform distribution so that data sizes are equal among the delivery servers 201 to 203. However, even if distribution is performed to equalize data sizes, the numbers of accesses to the delivery servers 201 to 203 are not necessarily equal. For example, if content on which delivery requests may be concentrated is stored in the delivery server 201, it is conceivable that the number of accesses to the delivery server 201 may be overwhelmingly large in comparison with the numbers of accesses to the delivery servers 202 and 203.

However, if registered content is content with a small data size such as a still image, delivery of the data is performed instantaneously, and therefore, it is only a very minor matter. However, if delivery of content with a huge data size such as a motion picture with voice is attempted from such an information delivery system, it causes a serious problem.

Especially when delivery of a motion picture is attempted with streaming, establishment of a session between a user terminal and a distribution server continues while the motion picture is reproduced. Therefore, if a lot of connection requests (session requests) are concentrated on one content, the delivery server in which the content is stored may be shut down. As a result, access to other contents stored in the shut-down delivery server is also disabled.

That is, in the information delivery system as described above, equalization of loads among delivery servers cannot be achieved even though sizes of data to be stored are equalized thereamong. For example, even if a music video of a famous singer and a personal home video have the same data size, these contents cannot be similarly treated because the expected numbers of connection requests are significantly different. However, it is impossible to determine how many accesses are to be made to registered content before registration, and therefore, it is impossible to perform load distribution based on what is included in content.

It is possible to prevent such a fault by preparing hardware resources capable of preventing a fault even if connection requests are concentrated on all registered contents such as a motion picture. However, if such hardware resources are prepared for all registered contents, a large-scaled information delivery system requires an impossible amount of equipment, and therefore, the solution is not practical.

### SUMMARY OF THE INVENTION

An object of at least one embodiment of the present invention is to provide an information delivery system and method capable of, even when delivering content with a large data size such as motion picture data and voice data, preventing concentration of connection requests on a particular delivery server and thereby delivering the content without causing a fault.

Aspects of the invention are defined in the independent claims. Preferred features of these aspects are defined in the dependent claims.

In the case of a common system server, the larger the ratio of the size occupied by data to the storage capacity is, the higher the load of the system server is estimated. Actually, however, the load magnitude of a delivery server does not have much correlation with the size of content to be delivered but it varies depending on how many requests are made for content stored therein.

For example, when comparison is made between a case of registering a personal home video as a motion picture and a case of registering a music video of a famous singer, the expected numbers of accesses to the motion pictures are significantly different even if their data sizes are the same. Therefore, a load imposed on a delivery server in the case of registering a personal home video as a motion picture is significantly different from that in the case of registering a music video of a famous singer.

Accordingly, in one embodiment, there is proposed a method for performing load distribution in consideration of the actual load of content registered with a delivery server.

The present invention is applied to an information delivery system for accumulating content registered by a user and delivering the accumulated content in response to a delivery request by another user.

The information delivery system is provided with a plurality of delivery servers, a session management database and a load distribution apparatus. management database and a load distribution apparatus.

The plurality of delivery servers store content requested by a user to be registered and deliver the content in response to a delivery request by another user.

The session management database stores, in association with each of the delivery servers, a total of the maximum numbers of simultaneous sessions, which is a total value of the maximum numbers of simultaneous sessions accumulated in each of the delivery servers, wherein the maximum number of simultaneous sessions is the number of sessions simultaneously connectable to registered content.

A load distribution apparatus selects a delivery server for registering content requested to be registered, based on the total of the maximum numbers of simultaneous sessions of each delivery server, which is stored in the session management database. The load distribution apparatus then adds the maximum number of simultaneous sessions set for the content to the total of the maximum numbers of simultaneous sessions corresponding to the delivery server selected as the content registration destination to update the session management database.

Preferably, the load distribution apparatus is adapted to select a delivery server for registering content to be newly registered, based on a total of the maximum numbers of simultaneous sessions, which is a total value of the maximum numbers of simultaneous sessions for contents registered with a delivery server, and thereby the values of the total of the maximum numbers of simultaneous sessions are equalized among delivery servers. Accordingly, in comparison with the case of registering content based on data sizes, the numbers of connection requests (the numbers of session requests) made against delivery servers may be equalized among the delivery servers, and thereby, it is possible to prevent concentration of connection requests on a particular delivery server even when delivering content with a large data size. As a result, it is possible to delivery content with a large data size such as motion picture data and voice data.

The load distribution apparatus may be configured by a content receiving unit, a server selecting unit and a content registering unit.

The content receiving unit receives content sent from a registrant terminal via the Internet together with information about the maximum number of simultaneous sessions.

The server selecting unit selects a delivery server with the smallest total of the maximum numbers of simultaneous sessions as a registration destination delivery server, with reference to the total of the maximum numbers of simultaneous sessions of each delivery server, which is stored in the session management database. The server selecting unit then takes out the information about the maximum number of simultaneous sessions from the data received by the content receiving unit, and adds the maximum number of simultaneous sessions taken out to the total of the maximum numbers of simultaneous sessions corresponding to the delivery server selected as the content registration destination to update the session management database.

The content registering unit registers the content received by the content receiving unit with the delivery server selected by the server selecting unit.

Furthermore, the information delivery system may further comprise a session history information storage database for storing information about the actual number of connection requests about content stored in each of delivery servers, and the load distribution apparatus may further comprise an exchange determination unit for exchanging contents among the plurality of delivery servers so that the actual numbers of sessions are equalized among the delivery servers based on the number of connection requests for each content, which is stored in the session history information storage database.

Preferably, the actual number of connection requests for content stored in a delivery server is recorded in a session history information storage database, and the exchange determination unit exchanges contents based on the number of connection requests for each content, which is stored in the session history information storage database. Accordingly, the actual numbers of connection requests may be equalized among delivery servers, which can enable further enhancement of efficiency and stabilization of the system operation.

The above and other features and advantages of the present invention will become apparent from the following description with reference to the accompanying drawings which illustrate examples of the present invention.

### BRIEF DESCRIPTION OF THE DRAWINGS

Fig. 1 is a block diagram showing the configuration of a prior-art information delivery system;
Fig. 2 is a block diagram showing the configuration of an information delivery system of a first embodiment of the present invention;
Fig. 3 is a diagram for illustrating information to be stored in a session management DB 210 in Fig. 2;
Fig. 4 is a block diagram showing the configuration of a load balancer 101 in Fig. 2;
Fig. 5 is a flowchart showing the operation of the information delivery system in Fig. 2;
Fig. 6 shows an example of a screen to be displayed on a registrant terminal 12 when the maximum number of simultaneous sessions is specified;
Fig. 7 is a diagram for illustrating the operation performed when a delivery server for registering image data requested to be registered is selected;
Fig. 8 is a diagram for illustrating the process performed when cloning of registered content to multiple servers is performed;
Fig. 9 is a block diagram showing the configuration of an information delivery system of a second embodiment of the present invention; and
Fig. 10 is a block diagram showing the configuration of a load balancer 102 in Fig. 9.

### DETAILED DESCRIPTION OF THE PREFERRED EMBODIMENTS

Embodiments of the present invention will be now described in detail with reference to drawings. Here, description will be made on a case where the present invention is applied to a system for providing an auction service as an example of an information delivery system.

### First embodiment:

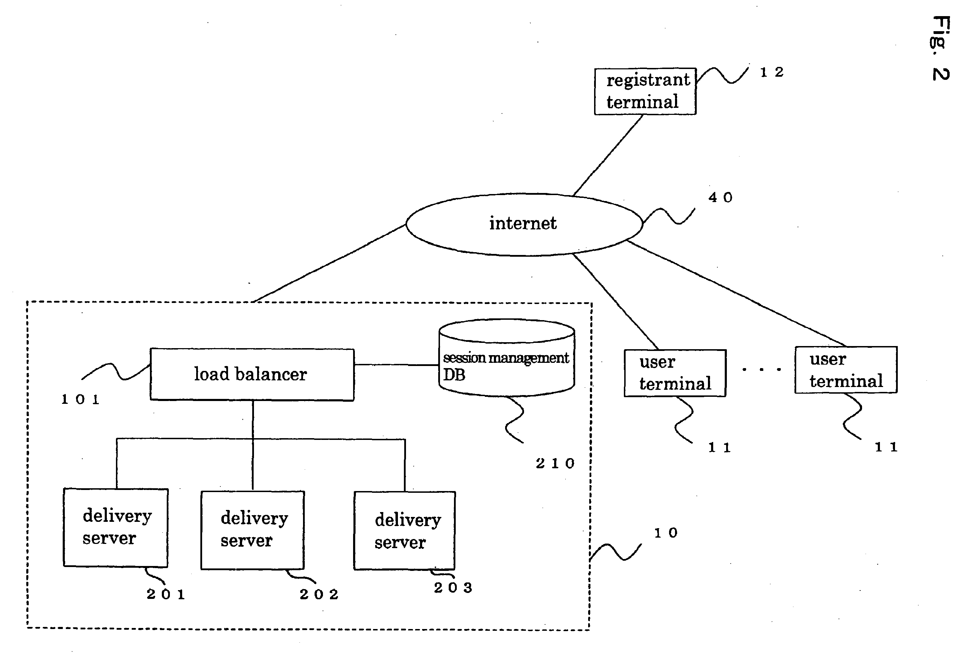

Fig. 2 is a block diagram showing the configuration of an information delivery system of a first embodiment of the present invention. In Fig. 2, the same components as those shown in Fig. 1 are given the same reference numerals, and description thereof will be omitted.

An information delivery system 10 of this embodiment is configured by a load balancer (load distribution apparatus) 101, a session management DB (database) 210 and delivery servers 201 to 203.

Here, description is made on a case where the information delivery system 10 is provided with three delivery servers 201 to 203, for simplification of the description. However, an actual large-scaled information delivery system is provided with more information delivery servers.

The session management DB (database) 210 stores, in association with each of the delivery servers 201 to 203, a total of the maximum numbers of simultaneous sessions, which is a total value of the maximum number of simultaneous sessions accumulated in each delivery server, wherein the maximum number of simultaneous sessions is the number of sessions simultaneously connectable to registered content, such as motion picture data.

Here, the maximum number of simultaneous sessions is an upper limit of the number of sessions for which simultaneous connection to content is permitted and is a value specified by a registrant who registers the content. That is, if there are made more connection requests then the maximum number of simultaneous sessions, content is not delivered to requests corresponding to the excess. The total of the maximum numbers of simultaneous sessions is a total value of the maximum numbers of simultaneous sessions to contents registered with the same delivery server.

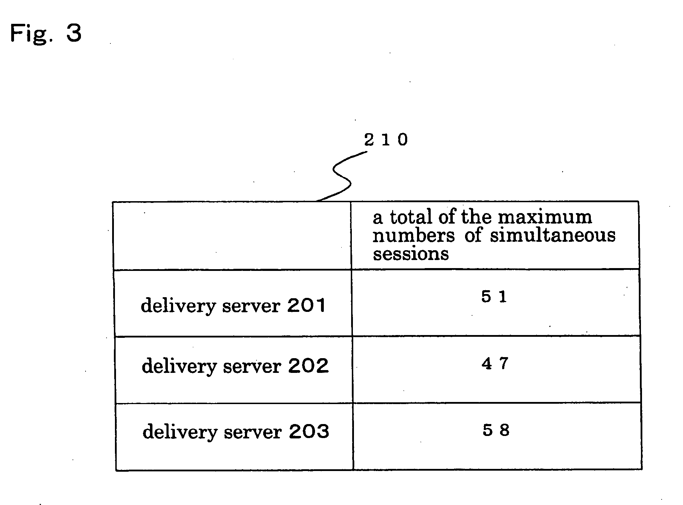

Fig. 3 shows an example of the total of the maximum numbers of simultaneous sessions stored in the session management DB 210. Fig. 3 shows that the total of the maximum numbers of simultaneous sessions to contents stored in the delivery server 201 is "51", and the totals of the maximum numbers of simultaneous sessions to contents stored in the delivery servers 202 and 203 are "47" and "58", respectively. As described above, in the session management DB 210, the total of the maximum numbers of simultaneous sessions is stored for each of the delivery servers 201 to 203.

The load balancer 101 selects a delivery server for registering content requested to be registered, based on the total of the maximum numbers of simultaneous sessions to each of the delivery servers 201 to 203, stored in the session management DB 210, and adds the maximum number of simultaneous sessions set for the content to the total of the maximum numbers of simultaneous sessions corresponding to a delivery server selected as the content registration destination to update the session management DB 210.

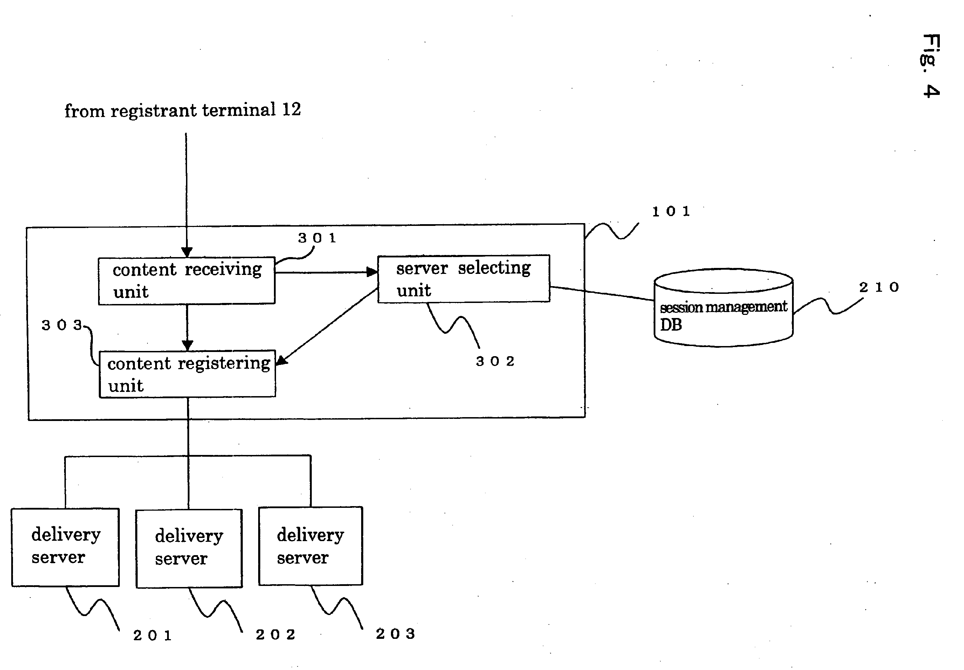

Next, the configuration of the load balancer 101 will be now described with reference to Fig. 4. The load balancer 101 in this embodiment is configured by a content receiving unit 301, a server selecting unit 302 and a content registering unit 303 as shown in Fig. 4.

The content receiving unit 301 receives content such as motion picture data sent from the registrant terminal 12 via the Internet 40 together with information about the maximum number of simultaneous sessions.

The server selecting unit 302 selects a delivery server for registering the content received by the content receiving unit 301 based on the maximum number of simultaneous sessions stored in the session management DB 210 for each of the delivery servers 201 to 203.

The server selecting unit 302 takes out the information about the maximum number of simultaneous sessions from the data received by the content receiving unit 301, and adds the maximum number of simultaneous sessions taken out to the total of the maximum numbers of simultaneous sessions corresponding to the delivery server selected as the content registration destination to update the session management DB 210.

The content registering unit 303 registers the content received by the content receiving unit 301 with the delivery server selected by the server selecting unit 302 as the registration destination.

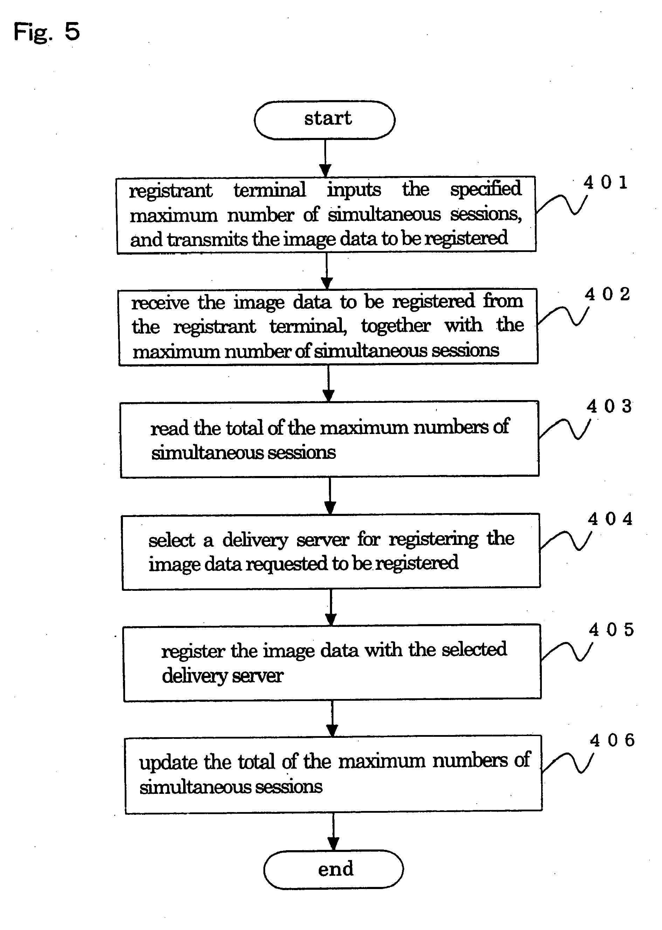

Next, the operation of the information delivery system 10 of this embodiment will be described in detail with reference to drawings. The operation of the information delivery system 10 of this embodiment is shown in the flowchart of Fig. 5.

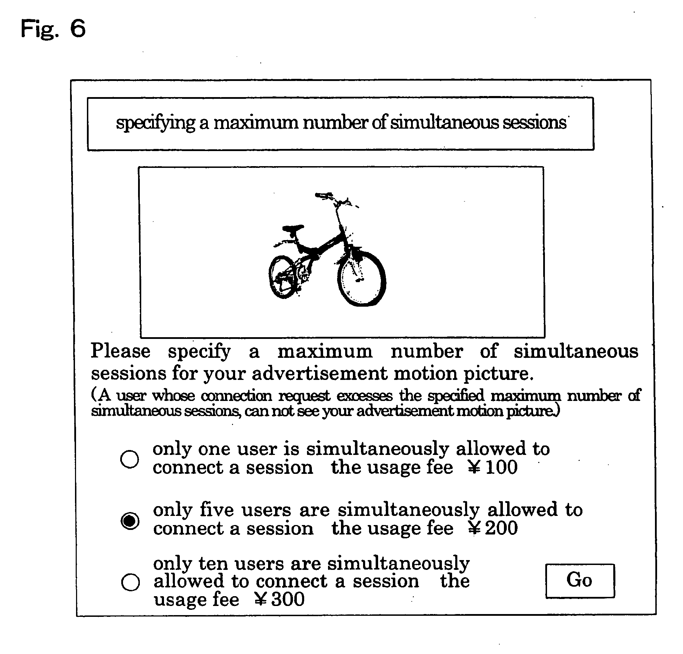

First, when uploading image data to be registered, to a delivery server of the information delivery system 10, the registrant, terminal 12 inputs the maximum number of simultaneous sessions specified by a registrant, and transmits the image data to be registered to the information delivery system 10 via the Internet 40 together with the specified maximum number of simultaneous sessions (step 401). Fig. 6 shows an example of a screen to be displayed on the registrant terminal 12 when the maximum number of simultaneous sessions is inputted.

Fig. 6 shows an example of a screen to be displayed when an advertisement motion picture for explaining an item exhibited to an auction is registered. In this example, an exhibitor who is a registrant specifies how many users are simultaneously allowed to connect sessions before registering the advertisement motion picture, and the exhibition fee varies depending on the specified maximum number of simultaneous sessions. For example, in the example shown in Fig. 6, the usage fee is only ¥100 when only one user is simultaneously allowed to connect a session, and the usage fee is ¥300 when 10 users are simultaneously allowed to connect sessions.

Then, the content receiving unit 301 of the load balancer 101 receives the image data to be registered, together with the maximum number of simultaneous sessions (step 402). When the image data to be registered is received by the content receiving unit 301, the server selecting unit 302 reads the total of the maximum numbers of simultaneous sessions to each of the delivery servers 201 to 203, from the session management DB 210 (step 403), and selects a delivery server with the smallest total of the maximum numbers of simultaneous sessions as the delivery server for registering the image data requested to be registered (step 404).

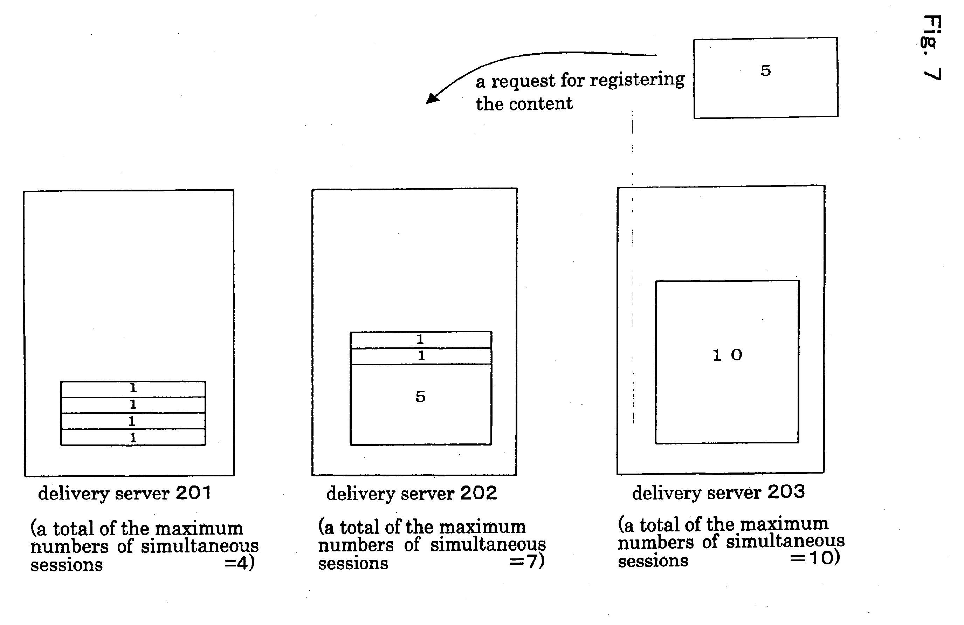

Description will be now made on the operation of the server selecting unit 302 selecting a delivery server to which image data is to be registered, with reference to an example of Fig. 7. In the example in Fig. 7, since four contents with the maximum number of simultaneous sessions set as "1" are registered with the delivery server 201, its total of the maximum numbers of simultaneous sessions is shown as "4". Since one content with the maximum number of simultaneous sessions set as "5" and two contents with the maximum number of simultaneous sessions set as "1" are registered with the delivery servers 202, its total of the maximum numbers of simultaneous sessions is shown as "7". Since one content with the maximum number of simultaneous sessions set as "10" is registered with the delivery servers 203, its total of the maximum numbers of simultaneous sessions is shown as "10".

If registration of content with the maximum number of simultaneous sessions set as "5" is newly requested in the condition as shown in Fig. 7, the server selecting unit 302 selects the delivery server 201 with the smallest total of the maximum numbers of simultaneous sessions as the registration destination delivery server.

When the registration destination delivery server is selected by the server selecting unit 302 as described above, the content registering unit 303 registers the image data with the delivery server selected by the server selecting unit 302 (step 405). Finally, the server selecting unit 302 updates the total of the maximum numbers of simultaneous sessions stored in the session management DB 210 (step 406).

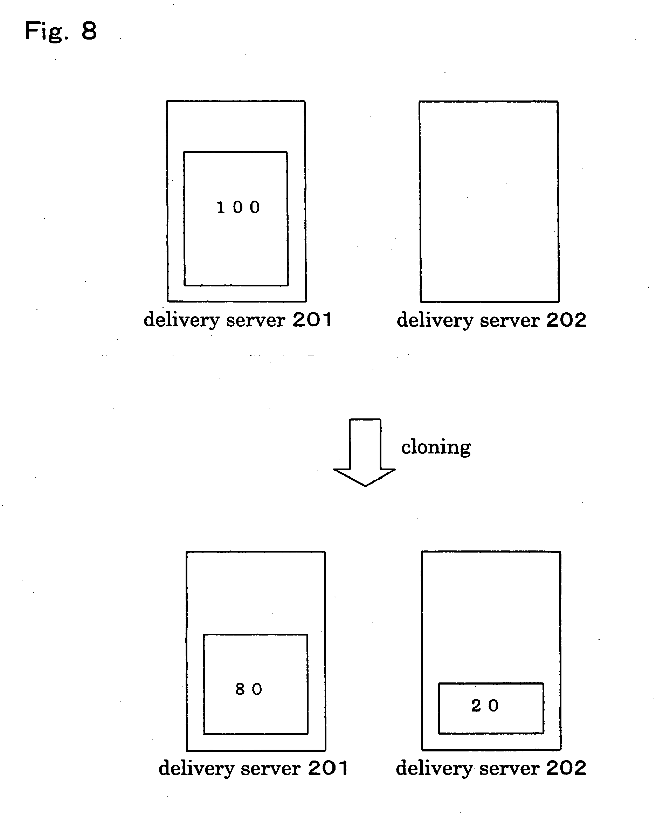

In the above description, when receiving a content registration request, the server selecting unit 302 selects a delivery server with the smallest total of the maximum numbers of simultaneous sessions. However, if it is difficult to allocate content requested to be registered, to a single delivery server because the maximum number of simultaneous sessions specified for the content is too large, then cloning, that is, registering one content with multiple delivery servers may be performed in the method as shown in Fig. 8. Instead of cloning a newly registered content to multiple delivery servers, it is also possible to clone an already registered content to two delivery servers to equalize the total maximum numbers of simultaneous sessions among delivery servers.

The cloning is performed not only by registering the same content data with two delivery servers but also by dividing the specified maximum number of simultaneous sessions based on the current total of the maximum numbers of simultaneous sessions of each delivery server. For example, in the example shown in Fig. 8, there is shown a case where cloning is performed by allocating content with the maximum number of simultaneous sessions specified as "100", which is registered with the delivery server 201, to the delivery server 201 and the delivery servers 202. In this example, in consideration of the current total maximum numbers of simultaneous sessions of the delivery server 201 and the delivery server 202, the content is registered with the delivery server 201 with the maximum number of simultaneous sessions specified as "20", and registered with the delivery servers 202 with the maximum number of simultaneous sessions specified as "80".

Description has been made using an example of cloning for registering the same content with two delivery servers. However, it is also possible to perform cloning for registering the same content with three or more delivery servers.

According to this embodiment, when registering content, the registrant sets an upper limit of the number of users to simultaneously connect sessions, and content registration with the delivery servers 201 to 203 is performed in a manner that the total maximum numbers of simultaneous sessions of the delivery servers are equalized. Therefore, the numbers of sessions against the delivery servers 201 to 203 can be equalized in comparison with the case of registering content based on data sizes. As a result, loads on delivery servers are equalized even in the case of delivering content with a large data size such as a motion picture, and thereby it is possible to prevent troubles such as a fault being caused by concentration of connection requests on a particular delivery server.

Accordingly, it becomes possible for a system capable of delivering only content with a small data size, such as a still image, to deliver content with a large data size, such as a motion picture.

For example, in the case of applying the information delivery system 10 of this embodiment to an auction service, an exhibitor specifies the maximum number of simultaneous sessions in consideration of the popularity degree of his item when exhibiting the item. Thus, it is possible for the operator of the auction to cause a registrant who has registered content with a higher number of accesses to pay a higher usage fee. Furthermore, by limiting the number of simultaneous sessions to each content to be below the maximum number of simultaneous sessions specified by a registrant, it is possible to prevent troubles such as system-down due to increase in a load on a particular deliver server. Furthermore, since a delivery server for registering content requested to be registered is determined based on the specified maximum number of simultaneous sessions, loads on delivery servers can be equalized.

Thus, it becomes possible to deliver large-sized data such as motion picture data. Accordingly, and it becomes possible for a system enabling description of an exhibited item only by a still ,image heretofore to enable more detailed description of an item with a motion picture, and thereby utilization of an auction can be promoted.

For example, it becomes possible for a system enabling only expression of the exterior appearance of an item viewed from a particular direction heretofore to enable expression of the exterior appearance of the item viewed from all directions by utilization of a motion picture, and thereby it is possible for an exhibitor and a winning bidder to agree with details, such as a scratch, which has been often missed. Accordingly, troubles between an exhibitor and a winning bidder are decreased, and the reliability of an item can be enhanced, which promotes the usage of the auction.

### Second embodiment:

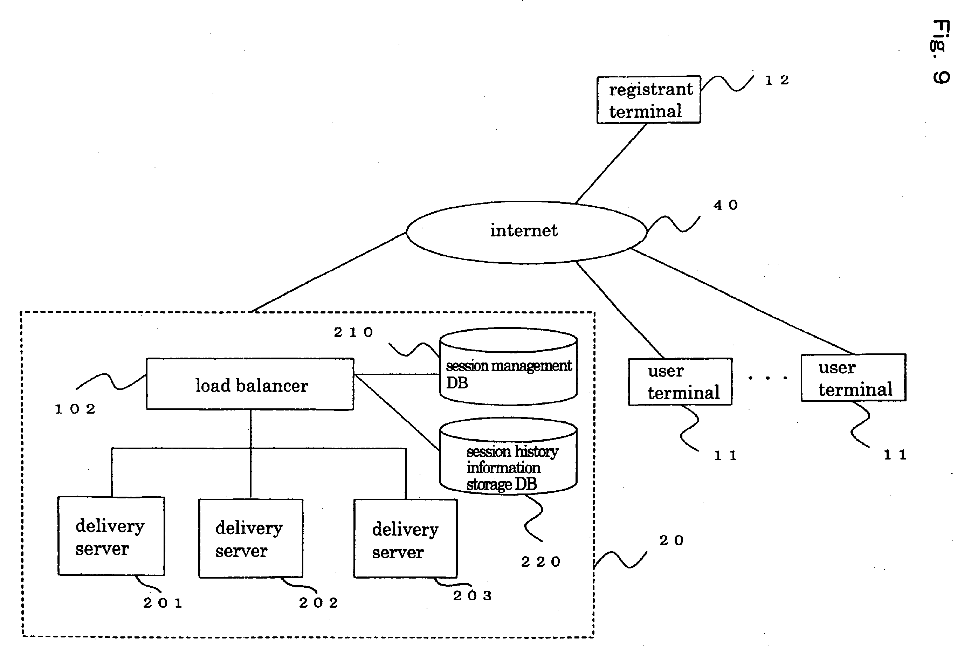

Next, an information delivery system of a second embodiment of the present invention will be described. Fig. 9 is a block diagram showing the configuration of an information delivery system 20 of the second embodiment. In Fig. 9, the same components as those shown in Fig. 2 are given the same reference numerals, and description thereof will be omitted.

The information delivery system 10 of the first embodiment in Fig. 2 described above selects a delivery server for registration based on the specified maximum number of simultaneous sessions when registering content. However, the information delivery system 20 of this embodiment exchanges contents among delivery servers based on the actual number of connection requests (the number of session requests) to further enhance efficiency and stabilization of the system operation.

As shown in Fig. 9, the configuration of the information delivery system 20 in this embodiment is the configuration of the information delivery system 10 of the first embodiment shown in Fig. 2 in which the load balancer 101 is replaced with a load balance 102 and a session history information storage DB (database) 220 is newly added.

In the session history information storage DB (database) 220, there are stored information about the actual number of connection requests for each content stored in each of the delivery servers 201 to 203.

When connection to content stored in the delivery servers 201 to 203 is requested, the load balancer 102 in this embodiment registers the connection request with the session history information storage DB 220.

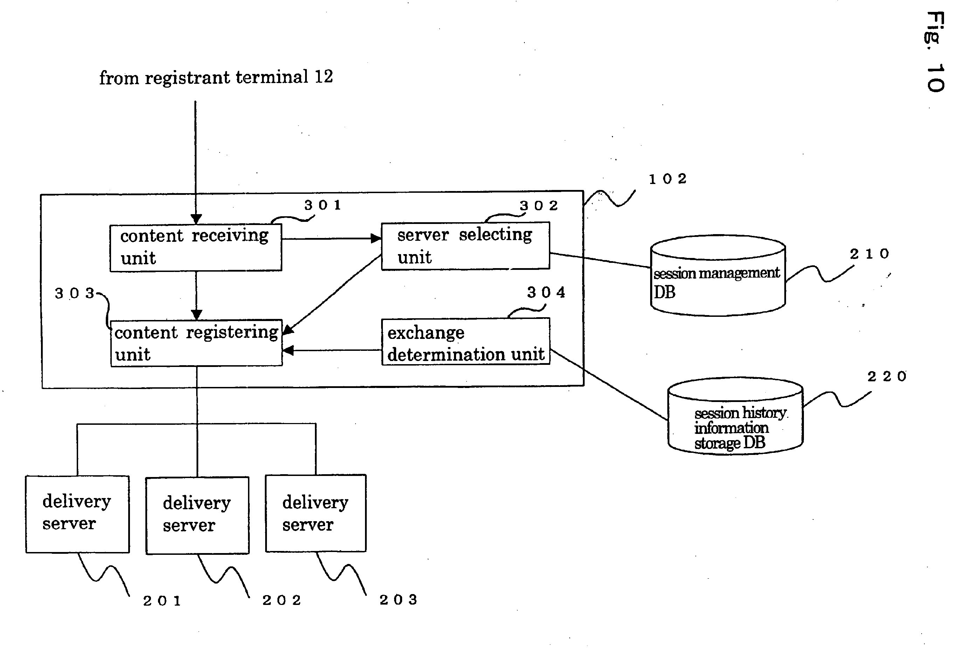

Next, the configuration of the load balancer 102 in this embodiment will be described with reference to Fig. 10.

As shown in Fig. 10, the load balancer 102 in this embodiment is configured by a content receiving unit 301, a server selecting unit 302, a content registering unit 303 and an exchange determination unit 304. In Fig. 10, the same components as those shown in Fig. 4 are given the same reference numerals, and description thereof will be omitted.

The configuration of the load balancer 102 in this embodiment is the configuration of the load balancer 101 of the first embodiment shown in Fig. 4 in which the exchanging determination unit 304 is added.

The exchanging determination unit 304 exchanges contents among the delivery servers 201 to 203 based on the actual number of connection requests for each content stored in the session history information storage DB 220 so that the numbers of sessions are equalized among the delivery servers 201 to 203.

In this case, since system shutdown is prolonged if a considerable amount of data is exchanged, the minimum exchange of contents is performed to achieve the maximum efficiency.

In this embodiment, since the exchange determination unit 304 exchanges contents based on the actual number of connections, the actual numbers of connection requests of the delivery servers 201 to 203 are equalized, and thereby further enhancement of efficiency and stabilization of the system operation can be expected.

The exchange determination algorithm to be performed by the exchange determination unit 304 is not performed to strictly keep equalization among the delivery servers 201 to 203 but performed only when it is determined that imbalance among the delivery servers 201 to 203 is equal to or above a threshold. The exchange algorithm checks all contents for the number of accesses, the time and date of access peak, the time that has elapsed after registration, and the like, predicts the number of connection request in the future for each content, and determines which contents should be exchanged.

In this case, if it is determined when contents are exchanged that better equalization among delivery servers can be expected by registering one content to multiple delivery servers, then cloning may be performed as shown in Fig. 8.

In the above first and second embodiments, description has been made on a case where the present invention is applied to an auction service as an example of an information delivery system for accumulating image information and voice information registered by a user and delivering the accumulated image information and voice information in response to a delivery request by another user. However, the present invention is not limited thereto and can be similarly applied to any information delivery system that delivers image information and voice information in response to a delivery request by a user.

The information delivery systems 10 and 20 of the first and second embodiments shown in Figs. 2 and 9, respectively, are provided with a recording medium on which a program for performing the above-described information delivery method is recorded though it is not shown in the figures. The recording medium may be a magnetic disk, a semiconductor memory, or any other recording medium. The program is read from the recording medium to the load balancers 101 and 102 of the information delivery systems 10 and 20 to control the operation of the load balancers 101 and 102. Specifically, by CPU's in the load balancers 101 and 102 instructing hardware resources of the load balancers 101 and 102 to perform particular processing under the control of the program, the above described processing is realized.

While preferred embodiments of the present invention have been described using specific terms, such description is for illustrative purposes only, and it is to be understood that changes and variations may be made without departing from the scope of the following claims.

Each feature disclosed in this specification (which term includes the claims) and/or shown in the drawings may be incorporated in the invention independently of other disclosed and/or illustrated features.

The text of the abstract filed herewith is repeated here as part of the specification.

A session management database stores, in association with each delivery server, a total of the maximum numbers of simultaneous sessions, which is a total value of the maximum numbers of simultaneous sessions accumulated in the delivery server, the maximum number of simultaneous sessions being the number of sessions simultaneously connectable to registered content. A load balancer selects a delivery server for registering content requested to be registered, based on the total number of the maximum numbers of simultaneous sessions of each delivery server, which is stored in the session management database as well as adding the maximum number of simultaneous sessions set for the content to the total of the maximum numbers of simultaneous sessions corresponding to the delivery server selected as the content registration destination to update the session management database.

## Claims

1. An information delivery system for accumulating content registered by a user and delivering the accumulated content in response to a delivery request by another user; the information delivery system comprising:
a plurality of delivery servers for storing content requested by a user to be registered and delivering the content in response to a delivery request by another user;
a session management database for storing, in association with each of the delivery servers, a total of the maximum numbers of simultaneous sessions, which is a total value of the maximum numbers of simultaneous sessions accumulated in each of the delivery servers, the maximum number of simultaneous sessions being the number of sessions simultaneously connectable to registered content; and
a load distribution apparatus for selecting a delivery server for registering content requested to be registered, based on the total of the maximum numbers of simultaneous sessions of each of the delivery servers, which is stored in the session management database as well as adding the maximum number of simultaneous sessions set for the content to the total of the maximum numbers of simultaneous sessions corresponding to the delivery server selected as the content registration destination to update the session management database.

2. The information delivery system according to claim 1, wherein the load distribution apparatus comprises:
a content receiving unit for receiving content sent from a registrant terminal via the Internet together with information about the maximum number of simultaneous sessions;
a server selecting unit for selecting a delivery server with the smallest total of the maximum numbers of simultaneous sessions as a registration destination delivery server, with reference to the total of the maximum numbers of simultaneous sessions of each of the delivery servers, which is stored in the session management database, as well as taking the information about the maximum number of simultaneous sessions from the data received by the content receiving unit and adding the maximum number of simultaneous sessions taken out to the total of the maximum numbers of simultaneous sessions corresponding to the delivery server selected as the content registration destination to update the session management database; and
a content registering unit for registering the content received by the content receiving unit with the delivery server selected by the server selecting unit.

3. The information delivery system according to claim 1 or 2, further comprising a session history information storage database for storing information about the actual number of connection requests about content stored in each of the delivery servers; wherein
the load distribution apparatus further comprises an exchange determination unit for exchanging contents among the plurality of delivery servers so that the actual numbers of sessions are equalized among the delivery servers based on the number of connection requests for each content, which is stored in the session history information storage database.

4. An information delivery method for accumulating content registered by a user and delivering the accumulated content in response to a delivery request by another user; the information delivery method comprising the steps of:
receiving content sent from a registrant terminal via the Internet together with information about the maximum number of simultaneous sessions;
selecting a delivery server with the smallest total of the maximum numbers of simultaneous sessions as a registration destination delivery server, with reference to the total of the maximum numbers of simultaneous sessions of each of the delivery servers, which is stored in the session management database;
registering the received content with the delivery server selected as the registration destination to which the content is to be registered; and
adding the maximum number of simultaneous sessions corresponding to the received content to the total of the maximum numbers of simultaneous sessions corresponding to the delivery server selected as the content registration destination to update the session management database.

5. The information delivery method according to claim 4, further comprising the steps of:
storing the actual number of connection requests for content stored in each of the delivery servers in a session history information storage database; and
exchanging contents among the plurality of delivery servers so that the actual numbers of sessions are equalized among the delivery servers based on the number of connection requests for each content, which is stored in the session history information storage database.
